# EUROPEAN PATENT APPLICATION

(11) **EP 4 748 632 A1**
(43) Date of publication of application: **27.05.2026**
(21) Application number: 25190512.1
(22) Date of filing: 18.07.2025
(51) Int. Cl.: B60L 53/65, B60L 53/66, B60L 53/67, B60L 53/68, B60L 53/80, B60L 58/13, B60L 58/16

(54) **BATTERY EXCHANGE METHOD BASED ON VEHICLE CONDITION AND BATTERY ENERGY STATION THEREOF**

(30) Priority: 22.11.2024 TW 113145100
(71) Applicant: Kwang Yang Motor Co., Ltd., Kaohsiung City (TW)
(72) Inventor: Hou, Yi-An, Kaohsiung (TW); Chou, Shu-Wei, Kaohsiung (TW)
(74) Representative: Petraz, Gilberto Luigi

(57) **Abstract**

A battery exchange method based on a vehicle condition is adaptive for a battery energy station (100) used for storing and charging a plurality of batteries (112). First, a battery exchange request is received, and a vehicle condition corresponding to a vehicle is obtained according to the battery exchange request. Then, in a battery selection operation, at least one target battery is selected from the batteries (112) according to the vehicle condition, and the at least one target battery is provided in response to the battery exchange request.

## Description

### 1. Field of the Invention

The present application relates generally to a battery exchange method and a battery energy station thereof, and more particularly to a battery exchange method that selects a battery and exchange it based on a vehicle condition (such as energy consumption of a vehicle) and a battery condition in a battery energy station, and a battery energy station thereof.

### 2. Description of Related Art

In recent years, with the rise of environmental awareness and the advancement of electric vehicle technology, the development of electric vehicles powered by electricity to replace traditional vehicles powered by fossil fuels has gradually become an important goal in the automotive field. So, the electric vehicles become more and more popular. In order to increase traveling mileage and user's willingness to use the electric vehicles, many countries or cities have planned to establish charging stations and battery energy stations in public places to provide electric vehicles and/or electric motorcycles for charging or for battery replacements, making the use of electric vehicles more convenient.

For different electric vehicles, the charging or the battery demand during peak hours and off-peak hours may be different. For example, the battery demand of the electric motorcycles during the peak hours will be higher than during the off-peak hours. During the peak hours, the battery energy station has to charge the battery fast to achieve the goal of full charge. However, during the off-peak hours, based on cost saving, because the battery demand is not so high, the battery energy station can charge the batteries slowly to meet specific battery requirements.

Besides, different users may have different usage scenarios and purposes for electric motorcycles. For example, office workers who commute for long distances need the batteries that can be charged fast and fully because of the long travelling mileages. However, in some situations, housewives may not use their electric motorcycles for a long time or for long travelling mileages every day, and they may just need feasible power instead of a fully charged battery. In some practical applications, different vehicles may need different batteries and powers to drive their internal related components, such as motor units. In general, batteries are one of the most dominant costs for the industry. How to properly charge and exchange the batteries in battery energy stations has become an urgent problem to be solved for the industry.

As mentioned above, an objective of the present invention is to provide a battery exchange method based on a vehicle condition and a battery energy station thereof.

A battery exchange method based on a vehicle condition of an embodiment of the present invention is adaptive for a battery energy station used for storing and charging a plurality of batteries. The method comprises: receiving a battery exchange request; obtaining a vehicle condition corresponding to a vehicle according to the battery exchange request; in a battery selection operation, selecting at least one target battery from the batteries according to the vehicle condition; and providing the at least one target battery in response to the battery exchange request.

A battery energy station of an embodiment of the present invention comprises a battery cabinet system comprising a plurality of batteries; a power module configured to charge the batteries; and a processor unit coupled to the battery cabinet system and the power module and configured to receive a battery exchange request, obtain a vehicle condition corresponding to a vehicle according to the battery exchange request, select at least one target battery from the batteries according to the vehicle condition in a battery selection operation, and provide the at least one target battery in response to the battery exchange request.

In some embodiments, a battery slot of the battery energy station receives a specific battery to generate the battery exchange request. Then, the specific battery is read to obtain a battery identification data corresponding to the specific battery, and the battery identification data is transmitted to a remote server via a network by the network connection unit. The remote server searches for a user identification data according to the battery identification data, performs a query according to the user identification data to obtain the vehicle condition, and transmits the vehicle condition to the battery energy station via the network.

In some embodiments, a battery condition corresponding to each one of the batteries of the battery energy station may be obtained, and the at least one target battery is selected from the batteries according to the vehicle condition and the battery condition corresponding to each one of the batteries.

In some embodiments, the vehicle condition comprises an energy efficiency corresponding to the vehicle, and the battery condition comprises a number of charge cycles. The at least one target battery is selected according to the energy efficiency and the number of charge cycles corresponding to each one of the batteries; wherein when the energy efficiency is higher, at least one battery of the batteries having the lowest number of charge cycles is selected as the at least one target battery in the battery selection operation.

In some embodiments, the battery condition further comprises a state-of-charge indicating a battery capacity corresponding to the battery. The at least one target battery is selected according to the energy efficiency and the number of charge cycles and the state-of-charge corresponding to each one of the batteries; wherein when the energy efficiency is higher, at least one battery of the batteries having higher state-of-charge and the lowest number of charge cycles is selected as the at least one target battery in the battery selection operation.

In some embodiments, a determination is to determine whether the state-of-charge of each one of the batteries is higher than a preset threshold value or a preset threshold ratio. When the state-of-charge of a corresponding battery is not higher than the preset threshold value or the preset threshold ratio, such battery is excluded from the battery selection operation.

In some embodiments, a battery slot of the battery energy station receives a specific battery to generate the battery exchange request. The processor unit reads the specific battery to obtain a battery identification data corresponding to the specific battery. A determination is to determine whether the state-of-charge of each one of the batteries is a preset value or a preset ratio higher than the state-of-charge of the specific battery. When the state-of-charge of a corresponding battery is not the preset value or the preset ratio higher than the state-of-charge of the specific battery, such battery is excluded from the battery selection operation.

The above-mentioned methods of the present invention may take the form of program codes. When the program codes are loaded into and executed by a machine, the machine thereby becomes an apparatus for practicing the methods of the present invention.

In order to make the above-mentioned objectives, features, and advantages of the present invention more clearly understandable, the following embodiments are specifically described in detail with reference to the accompanying drawings.

### In the drawings:

Fig. 1 is a circuit block schematic diagram of an embodiment of the battery energy station of the present invention.
Fig. 2 is a circuit block schematic diagram of another embodiment of the battery energy station of the present invention.
Fig. 3 is a flow chart of an embodiment of the battery exchange method based on a vehicle condition of the present invention.
Fig. 4 is a flow chart of an embodiment to obtain the vehicle condition of the present invention.
Fig. 5 is a flow chart of another embodiment of the battery exchange method based on a vehicle condition of the present invention.
Fig. 6 is a flow chart of another embodiment of the battery exchange method based on a vehicle condition of the present invention.
Fig. 7 is a flow chart of another embodiment of the battery exchange method based on a vehicle condition of the present invention.
Fig. 8 is a flow chart of another embodiment of the battery exchange method based on a state-of-charge of the present invention.
Fig. 9 is a flow chart of another embodiment of the battery exchange method based on a state-of-charge of the present invention.

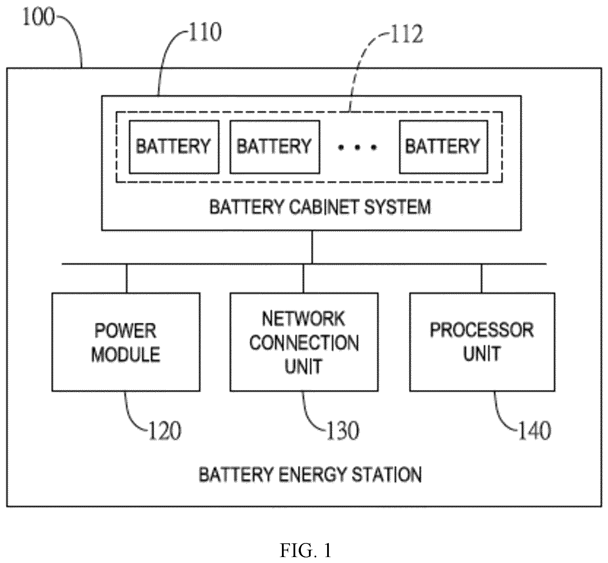

Fig. 1 depicts an embodiment of the battery energy station of the present invention. The embodiment of the battery energy station 100 of the present invention is adaptive for an electronic equipment. As shown in the figure, the battery energy station 100 at least comprises a battery cabinet system 110, a power module 120, a network connection unit 130, and a processor unit 140. The processor unit 140 is electrically coupled to the battery cabinet system 110, the power module 120, and the network connection unit 130. The battery cabinet system 110 has a specific mechanism (not shown in the figure) able to receive and store a plurality of batteries 112, and selectively lock or release the batteries 112. It should be noted that the battery cabinet system 110 may comprise a plurality of battery slots to receive and store the batteries 112. The battery energy station 100 may provide at least one electrical equipment, such as electric motorcycles or electric vehicles (EVs), with the batteries. The power module 120 may be electrically coupled to a power grid (not shown in the figure) to obtain a total current. The total current is for the usage of the battery energy station 100 and for charging the batteries 112 according to signals from the processor unit 140. It should be explained that the battery cabinet system 110 may comprise a plurality of charging modules. The batteries 112 each correspond to the charging modules. Each charging module has a current upper limit and/or a current lower limit for charging the corresponding battery. It should be noted that in some embodiments, the power module 120 may actively detect the total current provided from the power grid to the battery energy station 100, and inform the processor unit 140 of the total current. The network connection unit 130 may be connected to a network, such that the battery energy station 100 has the capability of network connection. In some embodiments, the network may be a wired network, a telecommunication network, a wireless network such as Wi-Fi network, and so on. The processor unit 140 may control the operations of the whole hardware and software of the battery energy station 100, and perform a battery exchange method of the present invention. The details are described as follows.

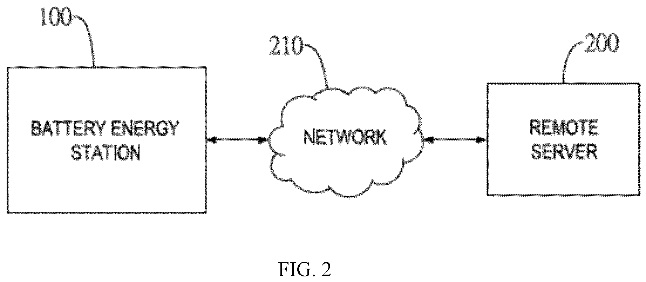

Fig. 2 depicts another embodiment of the battery energy station of the present invention. Similarly, the embodiment of the battery energy station 100 of the present invention is adaptive for an electronic equipment and has the batteries 112 to provide the batteries 112 to at least one electrical equipment, such as electric motorcycles or electric vehicles (EVs). The battery energy station 100 may have the components similar to the components shown in Fig. 1, so they are not repeatedly described herein. The battery energy station 100 may communicate with a remote server 200 by the network connection unit 130 via a network 210 such as a wired network, a telecommunication network, a wireless network such as Wi-Fi network, and so on. It should be noted that in some embodiments, the remote server 200 may manage the battery energy station 100 and other battery energy stations located at the same place or different places at the same time. As mentioned above, the power module 120 of the battery energy station 100 may actively detect the total current provided from the power grid to the battery energy station 100, and inform the processor unit 140 of the information corresponding to the total current. In some embodiments, the remote server 200 may also inform the battery energy station 100 of the information corresponding to the total current via the network 210. In some embodiments, the remote server 200 may also transmit relevant information in different time slots, such as peak hours and off-peak hours, to the battery energy station 100 via the network 210. In some embodiments, the remote server 200 may also transmit relevant user information to the battery energy station 100 via the network 210. The battery energy station 100 may operate based on the received information.

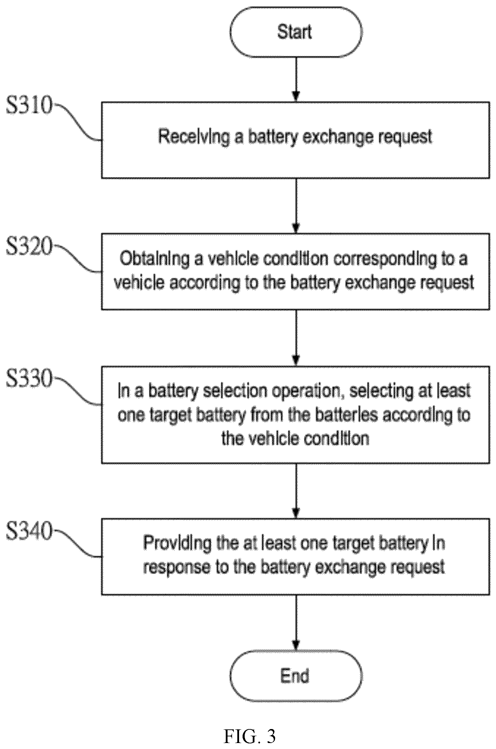

Fig. 3 depicts an embodiment of the battery exchange method based on a vehicle condition of the present invention. The embodiment of the battery exchange method based on the vehicle condition of the present invention is adaptive for an electronic equipment configured to receive, store, and charge the batteries, such as the battery energy station 100 shown in Fig. 1.

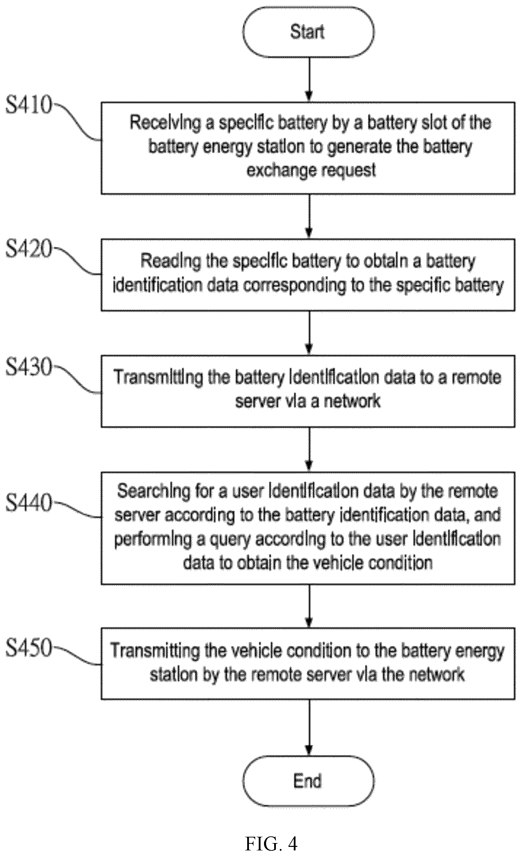

The battery exchange method of the present invention may be performed by the processor unit 140. At first, the step S310 is to receive a battery exchange request. It should be noted that in some embodiments, the battery cabinet system of the battery energy station may comprise at least one battery slot to receive a specific battery inserted by a user, and accordingly generate the battery exchange request. Then, the step S320 is to obtain a vehicle condition corresponding to a vehicle according to the battery exchange request received in the step S310. Fig. 4 depicts an embodiment of the method of the present invention to obtain the vehicle condition. At first, the step S410 is to receive a specific battery by a battery slot of the battery energy station to generate the battery exchange request. The step S420 is to read the specific battery to obtain a battery identification data corresponding to the specific battery. The step S430 is to transmit the battery identification data to a remote server via a network, such as a wired network, a telecommunication network, a wireless network such as Wi-Fi network, and so on. The step S440 is to search for a user identification data corresponding to the battery identification data by the remote server according to the battery identification data, and perform a query according to the user identification data to obtain the vehicle condition. It should be noted that each user and a vehicle to use may be bound in the remote server, and the vehicle has a corresponding vehicle condition. It should be noted that in some embodiments, the vehicle condition may be an energy efficiency. **In** some embodiments, the vehicle condition may be a vehicle type and/or a motor type corresponding to the vehicle. It should be noted that the foregoing vehicle conditions are just examples of the present invention. The present invention is not limited to such examples. Any parameter, condition, or state that can indicate the difference among vehicles may be applicable to the present invention. Then, the step S450 is to transmit the vehicle condition to the battery energy station by the remote server via the network. After obtaining the vehicle condition, the step S330 is to select at least one target battery from the batteries of the battery energy station according to the vehicle condition in a battery selection operation. After the battery selection, the step S340 is to provide the at least one target battery selected in the step S330 in response to the battery exchange request.

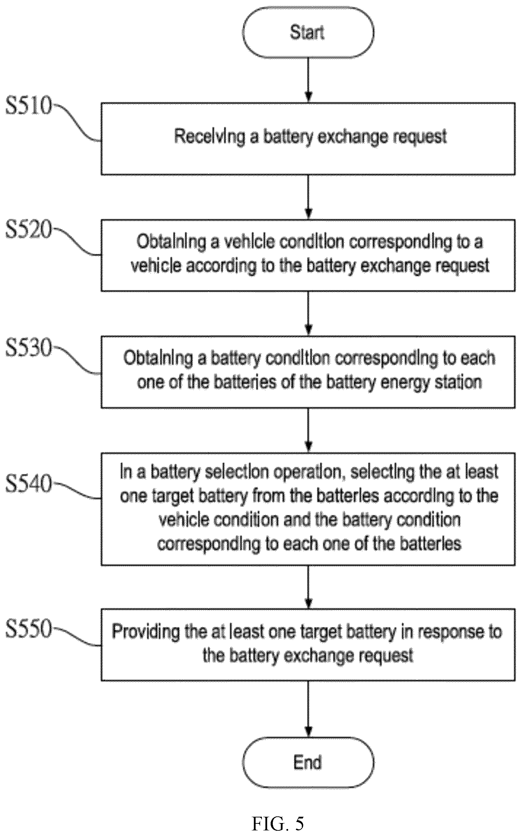

Fig. 5 depicts another embodiment of the battery exchange method of the present invention. The embodiment of the battery exchange method of the present invention is adaptive for an electronic equipment configured to receive, store, and charge the batteries, such as the battery energy station 100 shown in Fig. 1.

At first, the step S510 is to receive a battery exchange request. Similarly, in some embodiments, the battery cabinet system of the battery energy station may comprise at least one battery slot to receive a specific battery inserted by a user, and accordingly generate the battery exchange request. Then, the step S520 is to obtain a vehicle condition corresponding to a vehicle according to the battery exchange request received in the step S510. It should be noted that the means to obtain the vehicle condition may be performed according to the embodiment of Fig. 4. Similarly, in some embodiments, the vehicle condition may be an energy efficiency, a vehicle type and/or a motor type corresponding to the vehicle. Then, the step S530 is to obtain a battery condition corresponding to each one of the batteries of the battery energy station. It should be noted that in some embodiments, the battery condition may comprise a state-of-charge (SOC) and/or a number of charge cycles. It is noted that the state-of-charge may indicate a battery capacity corresponding to the battery. As mentioned above, the battery energy station can charge the batteries in the battery energy station. In some embodiments, the battery condition of the corresponding battery may be obtained from the battery management system (BMS) in such battery. After obtaining the vehicle condition and the battery condition, the step S540 is to select the at least one target battery from the batteries of the battery energy station according to the vehicle condition and the battery condition corresponding to each one of the batteries in a battery selection operation. After the battery selection, the step S550 is to provide the at least one target battery selected in the step S540 in response to the battery exchange request.

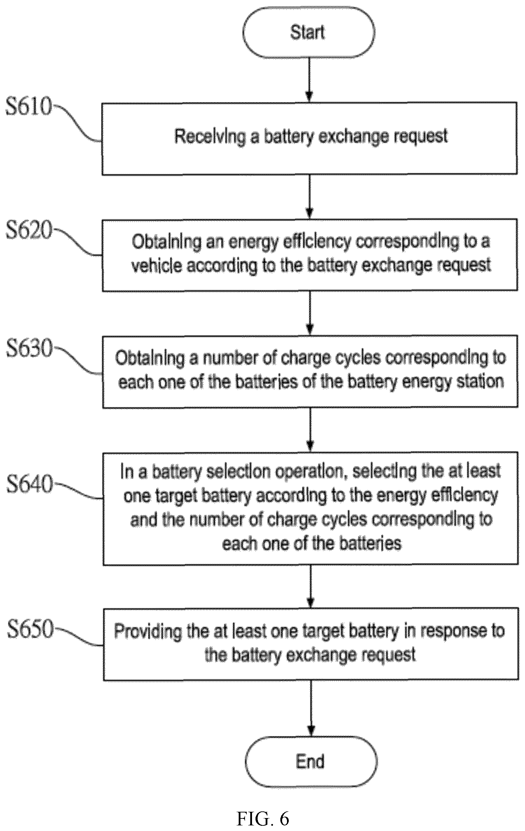

Fig. 6 depicts another embodiment of the battery exchange method of the present invention. The embodiment of the battery exchange method of the present invention is adaptive for an electronic equipment configured to receive, store, and charge the batteries, such as the battery energy station 100 shown in Fig. 1. In this embodiment, the vehicle condition may be an energy efficiency corresponding to the vehicle, and the battery condition may be a number of charge cycles of a corresponding battery.

At first, the step S610 is to receive a battery exchange request. Similarly, in some embodiments, the battery cabinet system of the battery energy station may comprise at least one battery slot to receive a specific battery inserted by a user, and accordingly generate the battery exchange request. Then, the step S620 is to obtain an energy efficiency corresponding to a vehicle according to the battery exchange request received in the step S610. It should be noted that the means to obtain the vehicle condition may be performed according to the embodiment of Fig. 4. Then, the step S630 is to obtain the number of charge cycles of each one of the batteries of the battery energy station. Similarly, the number of charge cycles of the corresponding battery may be obtained from the battery management system in such battery. Then, the step S640 is to select the at least one target battery from the batteries of the battery energy station according to the energy efficiency corresponding to the vehicle and the number of charge cycles corresponding to each one of the batteries in a battery selection operation. It is noted that in some embodiments, when the energy efficiency is higher, at least one battery of the batteries having the lowest number of charge cycles is selected as the at least one target battery in the battery selection operation. After the battery selection, the step S650 is to provide the at least one target battery selected in the step S640 in response to the battery exchange request.

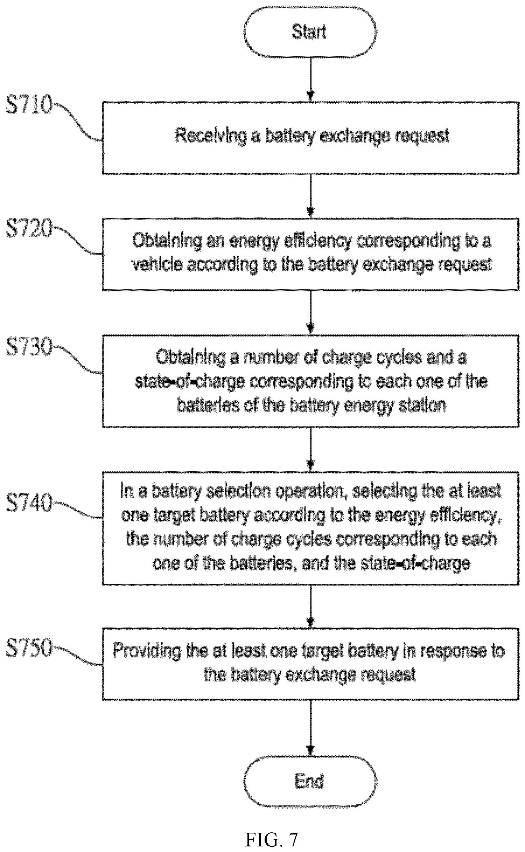

Fig. 7 depicts another embodiment of the battery exchange method of the present invention. The embodiment of the battery exchange method of the present invention is adaptive for an electronic equipment configured to receive, store, and charge the batteries, such as the battery energy station 100 shown in Fig. 1. In this embodiment, the vehicle condition may be an energy efficiency corresponding to the vehicle, and the battery condition may be a number of charge cycles and a state-of-charge of a corresponding battery.

At first, the step S710 is to receive a battery exchange request. Similarly, in some embodiments, the battery cabinet system of the battery energy station may comprise at least one battery slot to receive a specific battery inserted by a user, and accordingly generate the battery exchange request. Then, the step S720 is to obtain an energy efficiency corresponding to a vehicle according to the battery exchange request received in the step S710. It should be noted that the means to obtain the vehicle condition may be performed according to the embodiment of Fig. 4. Then, the step S730 is to obtain the number of charge cycles and the state-of-charge of each one of the batteries of the battery energy station. Similarly, the number of charge cycles and the state-of-charge of the corresponding battery may be obtained from the battery management system in such battery. Then, the step S740 is to select the at least one target battery from the batteries of the battery energy station according to the energy efficiency corresponding to the vehicle and the number of charge cycles and the state-of-charge corresponding to each one of the batteries. It is noted that in some embodiments, when the energy efficiency is higher, at least one battery of the batteries having higher state-of-charge and the lowest number of charge cycles is selected as the at least one target battery in the battery selection operation. After the battery selection, the step S750 is to provide the at least one target battery selected in the step S740 in response to the battery exchange request.

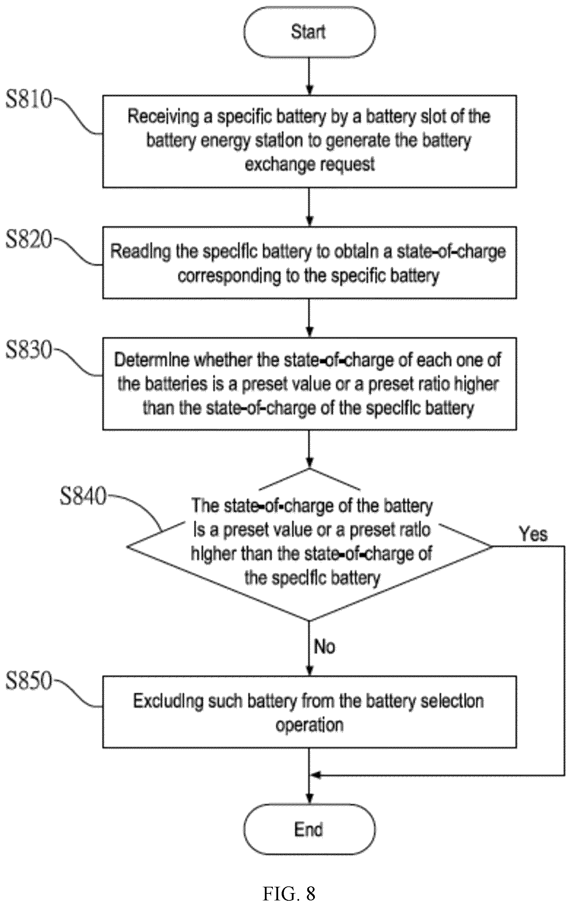

Fig. 8 depicts another embodiment of the battery exchange method of the present invention. The embodiment of the battery exchange method of the present invention is adaptive for an electronic equipment configured to receive, store, and charge the batteries, such as the battery energy station 100 shown in Fig. 1. In this embodiment, the state-of-charge of the foregoing selected battery has to be higher than the state-of-charge of the user's specific battery.

At first, the step S810 is to receive a specific battery by a battery slot of the battery energy station to accordingly generate a battery exchange request. The step S820 is to read the specific battery to obtain a state-of-charge corresponding to the specific battery. Then, step S830 is to determine whether the state-of-charge of each one of the batteries is a preset value or a preset ratio higher than the state-of-charge of the specific battery, such as 20% higher than the state-of-charge of the specific battery. It should be noted that the preset value or the preset ration is just an example of the present invention, and the present invention is not limited to such example. When the state-of-charge of a corresponding battery is the preset value or the preset ratio higher than the state-of-charge of the specific battery ("Yes" at the step S840), the process is ended. When the state-of-charge of a corresponding battery is not the preset value or the preset ratio higher than the state-of-charge of the specific battery ("No" at the step S840), the process excludes such battery from the battery selection operation as the step S850.

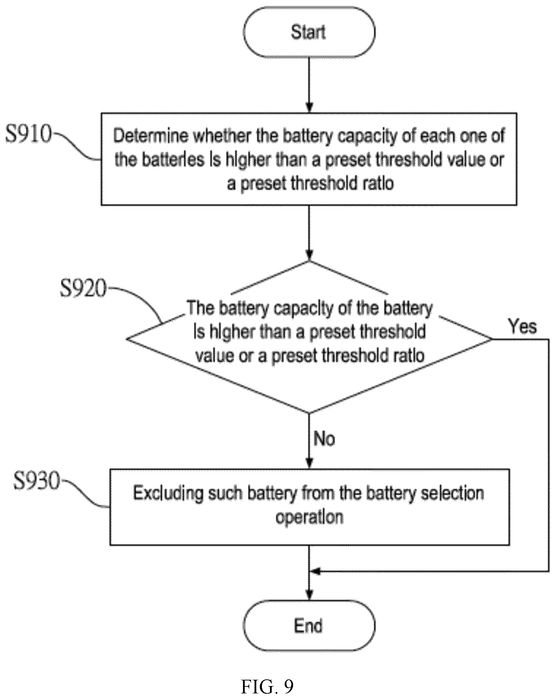

Fig. 9 depicts another embodiment of the battery exchange method of the present invention. The embodiment of the battery exchange method of the present invention is adaptive for an electronic equipment configured to receive, store, and charge the batteries, such as the battery energy station 100 shown in Fig. 1. This embodiment may filter the batteries according to the state-of-charge and/or capacity of the batteries before the battery selection operation.

At first, the step S910 is to determine whether the state-of-charge of each one of the batteries is higher than a preset threshold value or a preset threshold ratio. It should be noted that the preset threshold value and the preset threshold ratio may be set according to different applications and requirements. For example, the preset threshold ratio may be 80% of a maximum saturation capacity of the battery. It should be noted that the foregoing preset threshold ratio is just an example of the present invention. The present invention is not limited to such example. When the battery capacity of a corresponding battery is higher than the preset threshold value or the preset threshold ratio ("Yes" at the step S920), the process is ended. When the battery capacity of a corresponding battery is not higher than the preset threshold value or the preset threshold ratio ("No" at the step S920), the process excludes such battery from the battery selection operation as the step S930.

Therefore, through the battery exchange method based on the vehicle condition and the battery energy station of the present invention, the batteries are selectable and exchangeable based on the vehicle condition (such as the energy consuming performance, the vehicle type, and/or the motor type corresponding to the vehicle) and the battery conditions in the battery energy station (such as the number of charge cycles and/or the state-of-charge), so as to further improve the actual situation and needs of electric vehicles while meeting the demand for battery replacement.

The method of the present invention, or certain aspects or portions thereof, may take the form of program codes. The program codes may be embodied in tangible media, such as floppy diskettes, CD-ROMS, hard disk drives, or any other machine-readable (such as computer-readable) storage medium, or not limited to the external formation of a computer program product; wherein when the program codes are loaded into and executed by a machine such as a computer, the machine thereby becomes an apparatus for practicing the methods of the present invention. The program codes may also be transmitted via some transmission medium, such as electrical wires, cables, optical fibers, or any other form of transmission; wherein when the program codes are received and loaded into a machine and executed by the machine such as a computer, the machine becomes an apparatus for practicing the methods of the present invention. When the program codes are implemented on a general-purpose processor unit, the combination of the program codes and the processor unit provides a unique apparatus that operates analogously to application-specific logic circuits.

While the disclosure has been described in connection with the exemplary embodiments, it is understood that the present invention is not limited to the disclosed embodiments but is intended to cover various arrangements included within the spirit and scope of the broadest interpretation so as to encompass all such modifications and equivalent arrangements.

## Claims

1. A battery exchange method based on a vehicle condition, **characterized in that** the battery exchange method is adaptive for a battery energy station (100) used for storing and charging a plurality of batteries (112), and comprises:
receiving a battery exchange request;
obtaining a vehicle condition corresponding to a vehicle according to the battery exchange request;
in a battery selection operation, selecting at least one target battery from the batteries (112) according to the vehicle condition; and
providing the at least one target battery in response to the battery exchange request.

2. The method as claimed in claim 1 further comprising:
receiving a specific battery by a battery slot of the battery energy station (100) to generate the battery exchange request;
reading the specific battery to obtain a battery identification data corresponding to the specific battery;
transmitting the battery identification data to a remote server (200) via a network (210);
searching for a user identification data by the remote server (200) according to the battery identification data, and performing a query according to the user identification data to obtain the vehicle condition; and
transmitting the vehicle condition to the battery energy station (100) by the remote server (200) via the network (210).

3. The method as claimed in claim 1 further comprising:
obtaining a battery condition corresponding to each one of the batteries (112) of the battery energy station (100); and
selecting the at least one target battery from the batteries (112) according to the vehicle condition and the battery condition corresponding to each one of the batteries (112).

4. The method as claimed in claim 3, wherein the vehicle condition comprises an energy efficiency corresponding to the vehicle, and the battery condition comprises a number of charge cycles;
the method further comprising: selecting the at least one target battery according to the energy efficiency and the number of charge cycles corresponding to each one of the batteries (112); wherein when the energy efficiency is higher, at least one battery (112) of the batteries (112) having the lowest number of charge cycles is selected as the at least one target battery in the battery selection operation.

5. The method as claimed in claim 4, wherein the battery condition further comprises a state-of-charge indicating a battery capacity corresponding to each one of the batteries (112);
the method further comprising: selecting the at least one target battery according to the energy efficiency and the number of charge cycles and the state-of-charge corresponding to each one of the batteries (112); wherein when the energy efficiency is higher, at least one battery (112) of the batteries (112) having higher state-of-charge and the lowest number of charge cycles is selected as the at least one target battery in the battery selection operation.

6. A battery energy station (100) **characterized in** comprising:
a battery cabinet system (110) comprising a plurality of batteries (112);
a power module (120) configured to charge the batteries (112); and
a processor unit (140) coupled to the battery cabinet system (110) and the power module (120) and configured to receive a battery exchange request, obtain a vehicle condition corresponding to a vehicle according to the battery exchange request, select at least one target battery from the batteries (112) according to the vehicle condition in a battery selection operation, and provide the at least one target battery in response to the battery exchange request.

7. The battery energy station (100) as claimed in claim 6 further comprising a network connection unit (130), wherein
a battery slot of the battery energy station (100) receives a specific battery to generate the battery exchange request;
the processor unit (140) reads the specific battery to obtain a battery identification data corresponding to the specific battery, and transmits the battery identification data to a remote server (200) via a network (210) by the network connection unit (130); and
the remote server (200) searches for a user identification data according to the battery identification data, performs a query according to the user identification data to obtain the vehicle condition, and transmits the vehicle condition to the battery energy station (100) via the network (210).

8. The battery energy station (100) as claimed in claim 6, wherein the processor unit (140) obtains a battery condition corresponding to each one of the batteries (112) of the battery energy station (100), and selects the at least one target battery from the batteries (112) according to the vehicle condition and the battery condition corresponding to each one of the batteries (112).

9. The battery energy station (100) as claimed in claim 8, wherein the vehicle condition comprises an energy efficiency corresponding to the vehicle, and the battery condition comprises a number of charge cycles;
the processor unit (140) configured to select the at least one target battery according to the energy efficiency and the number of charge cycles corresponding to each one of the batteries (112); wherein when the energy efficiency is higher, at least one battery (112) of the batteries (112) having the lowest number of charge cycles is selected as the at least one target battery in the battery selection operation.

10. The battery energy station (100) as claimed in claim 9, wherein the battery condition further comprises a state-of-charge indicating a battery capacity corresponding to each one of the batteries (112);
the processor unit (140) configured to select the at least one target battery according to the energy efficiency and the number of charge cycles and the state-of-charge corresponding to each one of the batteries (112); wherein when the energy efficiency is higher, at least one battery (112) of the batteries (112) having higher state-of-charge and the lowest number of charge cycles is selected as the at least one target battery in the battery selection operation.
